Europäisches Patentamt

European Patent Office

Office européen des brevets

(19)

(11) **EP 1 164 744 A1**

(12) **EUROPEAN PATENT APPLICATION**

(43) Date of publication:
**19.12.2001 Bulletin 2001/51**

(51) Int Cl.⁷: **H04L 9/32**

(21) Application number: **00202091.5**

(22) Date of filing: **16.06.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Koninklijke KPN N.V.**<br>**9726 AE Groningen (NL)** | (72) Inventor: **Gelbord, Boaz Simon**<br>**1012 NM Amsterdam (NL)**<br><br>(74) Representative: **Wuyts, Koenraad Maria et al**<br>**Koninklijke KPN N.V., Intellectual Property Group, P.O. BOX 95321**<br>**2509 CH The Hague (NL)** |

(54) **Cryptographic comparison of selections from small ranges**

(57) Method for comparing selections of two respective parties from a predetermined range comprising the steps of selecting a range of values, selecting at least one committed value (x,y) of said range by a sending party, composing a commitment message by each party, including control numbers corresponding respectively with each one value of said range, sending by each party of its commitment message to the other party, and verification by the receiving party of said received commitment message including checking of the presence of at least one committed value.

Fig. 1

## Description

The invention relates to a method for comparing selections from small ranges.

In computer communication, and especially using the Internet, the situation frequently arises that two parties want to compare messages, without revealing the content of the message. For example, in a situation of negotiation between a buyer and a seller on the Internet, both buyer and seller would like to make an offer for a price and compare whether both their prices match. In the case the offers do not match, neither party should be able to find out what the offer of the other party was.

For situations where the possible range of selections, for example the price range, is relatively large the known method of hashing can be used to achieve this goal. This hashing method is not suitable however for situations where the possible range of selections is limited. In this case a trusted third party could be used to solve the problem, but this makes the procedure complex and in many cases practically impossible.

The goal of the invention is to provide a method that solves these disadvantages, by means of which two parties can compare selections from a small range without revealing the content of their messages, without the necessity of using a trusted third party .

This goal is achieved by a method according to claim 1.

Briefly, the sending party commits itself to a value from a range agreed with the receiver. The sender compiles a commitment message with control numbers for each value in the range; the control numbers are selected such that the receiver is able to deduce from the control numbers that the sender has committed to one of the values, without knowing which value. If the verification leads to the conclusion that the sender did not commit to any value, the receiver terminates the procedure.

In a next step the receiving party can ask the sender a question by way of oblivious transfer; the question is whether the sender is committed to a certain value of the range. The sender replies by way of oblivious transfer, which implies that the sender does not know the question asked. The receiver is now able to deduce from the sender's reply the answer to his question, i.e. whether the committed values match or not, and verify whether this answer complies with the previous received commitment value.

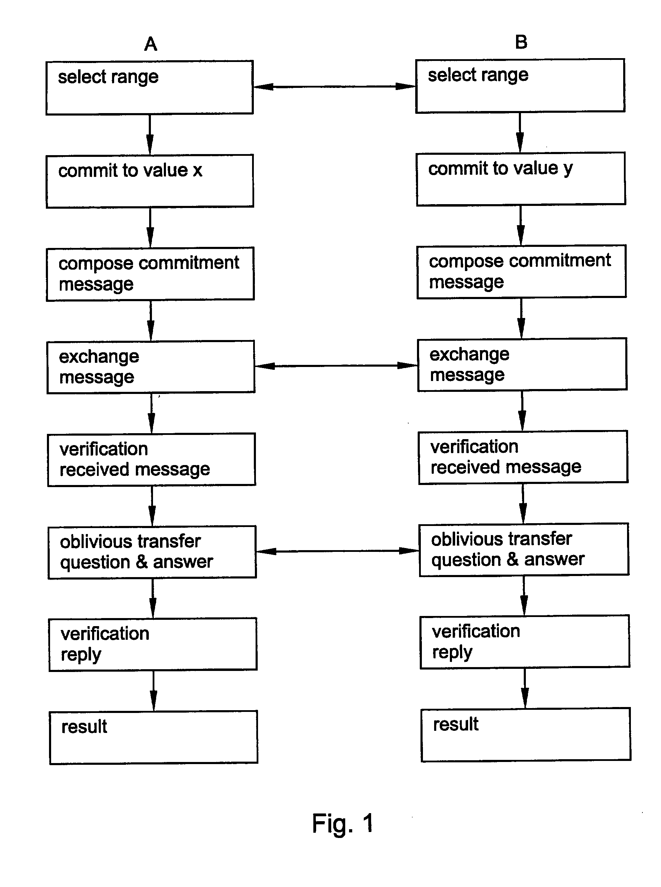

Particularly advantageous elaborations of the invention are set forth in the dependent claims. Further objects, elaborations, modifications, effects and details of the invention appear from the following description, in which reference is made to the drawing, in which Fig. 1 shows a flow diagram of an implementation of the invention.

In an embodiment of the invention a first party A wants to sell a certain object to a second party B; party B is willing to buy the object. The sale will take place if a price offered by buyer B is acceptable for seller A. A and B agree on a range within they want to compare offers, for example 10 to 100 monetary units, divided in ten intervals. Both A and B will commit themselves to one of the intervals, the one interval that corresponds with their offer. This step, as well as the steps mentioned hereinafter correspond to the flow diagram of fig. 1. In fig. 1 the steps performed by party A are shown on the left hand side, and those performed by party B are shown on the right hand side. Whenever information is exchanged between party A and B this is shown by an double headed arrow linking the respective flow chart items of party A and B.

A and B agree on a range of intervals indicated by unique numbers between 1 and t, wherein t is an integer. Party A commits himself to an interval of the range indicated by x whereas party B commits himself to an interval of the range indicated by y.

A generates two random primes p, q of bit size c; p and q are chosen such that -1 is a non-quadratic residue modulo p and q. Both p and q are kept secret by A. Subsequently a parameter n is determined as:

$$n = pq$$

By choosing a large bit size c the security of the method can be increased; a large bit size c means however that more calculation time is needed to perform the method.

A further generates a range of control numbers $a_1$- at by selecting for each $a_i$ (1<=i<=t) a random value k, that fulfils both the conditions:

- 1<k<n, and
- k is a quadratic residue modulo n.

A master control number a is defined to be one of the four square roots modulo n of the number:

$$\Pi_{i=1}^{t} a_i \bmod n$$

Party A composes a commitment message comprising the numbers:

$$\{n, a, a_1, ..., -a_x, ..., a_t\}.$$

In the commitment message party A has indicated the value x to which party A has committed himself by taking the additive inverse value of $a_x$. Party A does not disclose in the commitment message for which index i this additive inverse value has been applied.

Party B performs the steps to compose a commitment message in similar fashion, with control numbers $b_i$, and a predetermined number m. Note that the

control numbers $b_i$, and the predetermined number m are different from the numbers used by party A.

Subsequently party A sends its commitment message to party B. Party B receives the commitment message from A and verifies whether the commitment message includes at least one committed value. In this example the verification of the commitment message comprises determining whether the square of the master control number a equals the product of each of the control numbers $a_i$. The corresponding formula of this condition is:

$$a^2 \equiv \Pi_{i=1}^t \ a_i \text{ mod } n$$

If the commitment message meets this requirement, then it is certain that party A has committed himself to at least one value, although party B does not know to which value. If the verification requirement is not met, party A has committed himself to an even number of values and therefore necessarily not to a single value. Party B can subsequently cancel the protocol as party A has cheated by not committing to a single value.

Party B transmits in similar fashion a commitment message to A with the value party B is committed to, and accordingly party A verifies the commitment of party B.

If both the verifications of party A and B are validated, it is established between parties that they each have committed to a value of the range, without knowing to which value. In the next phase of the procedure according to the invention party A and B will compare whether they have committed to the same value or not; in case the values do not match neither party will know to which value the other party had committed itself.

If party B has established that party A has committed to at least one value, party B can proceed to the next step in the protocol. In this step, party B asks party A one single question regarding to which value party A has committed, to which question party A will answer without knowing the question. In this embodiment of the invention the known method of oblivious transfer is used to achieve this. As question B will put whether the committed value of A is equal to the committed value of B.

The invention is not limited to a single question as shown in this example; the invention can be implemented for posing more than one question.

Oblivious transfer is a well known technique in encryption protocols, so a detailed description of the implementation is left out.

For the oblivious transfer party A determines a range of oblivious transfer control strings $u_i$ in the form of strings defined as:

$$u_i = a'_i \| 0..0$$

The values for $a_i'$ are defined as:

$$(a'_i)^2 \equiv a_i \text{ mod } n$$

The length of each string $u_i$ is 2tc; all values for $u_i$ are $a_i'$ with padded zero's except for $u_x$ which is defined as:

$$u_x = a'_1 \| a'_2 \| .. \| a'_t$$

Party B accordingly prepares a range of oblivious transfer control including numbers $v_i$.

Using a known method of oblivious transfer, party A asks a single question to party B, to which party B responds by obliviously transferring exactly one of the strings $v_i$. Party A asks for the transfer of the string that corresponds with the value that party A has committed to.

Party B asks in similar fashion for exactly one of the strings $u_i$.

As is the case with oblivious transfer, the party replying to a question does not know to which question is answered, in this case, it is not known which of the strings $u_i$ respectively $v_i$ is being transferred.

The index of the string received is respectively a' and b'. After both parties receive the respective string u and v, they carry out a verification of that string. Consequently, two situations can occur: first, the received string u is padded with zero's. In this case, party A verifies that in the previously transferred control numbers $b_i$ has received a square root (mod m) in the position $b_{a'}$. If this is the case, the answer to the question posed by A is negative, that is to say the value asked by A is not the value that B has committed to. If the verification fails, party B has cheated, and party A terminates the protocol.

In the case that $V_{a'}$ is not padded with zero's, party A verifies that in the previously received control numbers, he has received the square roots (mod m) of all the $b_i$. If this is validated, the value for y is known to party A, and the answer to the question posed by A is affirmative, that is to say the value asked by A is equal to the value that B has committed to. If the verification fails, party B has cheated, and party A terminates the protocol. In similar fashion party B will verify the reply by party A.

In this way party A and B have been able to compare their respective commitments efficiently without the need of a trusted third party and without the risk of unnecessarily disclosing their commitments.

If information is intercepted during the exchange of information between A and B, e.g. in case of a non secure connection such as the Internet, the third party will not gain knowledge of the secret values x or y. Also the messages exchanged between A and B will not leak information, as they are encrypted using a recognised hard mathematical problem, provided that the parameter length corresponding with the problem, c in this example, is long enough.

The number of computations that have to be performed as well as the memory requirement are polynomial in the size of the parameter t in this example.

The invention is not limited to the protection of the commitment message used in the above described embodiment by means of the quadratic residue problem. This protection can also be achieved according to the invention by way of other well known difficult mathematical problems such as factoring large numbers and computing discrete logarithms.

In the previous example the invention is implemented for comparing values from a range, the invention is however not limited to this application. The invention can also be applied with other selections from small ranges. For example parties can agree over a range consisting of values representing information such as age, interests, education etc. Using such ranges, parties can compare mutual corresponding properties, without disclosing the properties. This can be for example in finding like minded persons within a web-based community, whereby the searching parties do not disclose their interest to others. An other example of an application for the invention is for matching job opportunities to interested persons, for which the range of values corresponds to job particulars such as experience, education, salary etc.. In this case both the party offering the job and the party looking for a job do not want to disclose their intentions to others, except to parties with matching particulars.

The invention can be implemented for example in a protocol suitable to be executed on a computer or on a computer network. The invention can for example also be implemented on a computer system of an Internet service provider to which parties have, preferably secure, access. The invention can also be implemented on an Internet server that provides an e-commerce environment to which parties have secure access.

The invention can be implemented in software, suitable for running on a client computer of each one of the parties involved. The software program product includes program portions for executing the respective steps of the method according to the invention. In particular the program product according to the invention can be implemented as software suitable to be downloaded over a network, like the Internet, e.g. in the form of Java applets.

## Claims

1. Method for comparing selections of two respective parties from a predetermined range comprising the steps of selecting a range of values,

    selecting at least one committed value (x,y) of said range by a sending party,

    composing a commitment message by each party, including control numbers corresponding respectively with each one value of said range, sending by each party of its commitment message to the other party, and

    verification by the receiving party of said received commitment message including checking of the presence of at least one committed value.

2. Method as claimed in claim 1, further comprising the steps of

    posing by the receiving party to the sending party of at least one question with respect to the committed value by way of oblivious transfer, and

    verification by the receiving party of the reply obliviously transferred by the sending party, including comparison of the oblivious transferred reply with the corresponding commitment message.

3. Method as claimed in claim 1 or 2, wherein the control numbers comprise for each value of said range a quadratic residue modulo a predetermined number (n), wherein said predetermined number (n) is the multiplication of at least two prime numbers (p, q).

4. Method as claimed in claim 3, wherein the control number associated with said at least one committed number comprises the additive inverse of a quadratic residue modulo of said predetermined number (n).

5. Method as claimed in claim 3 or 4, wherein said commitment message includes at least said predetermined number (n).

6. Method as claimed in any one of claim 3-5, wherein said commitment message includes at least a master control number (a) formed by at least taking a square root of the product of each control number, modulo n.

7. Method as claimed in claim 6, wherein the verification of the commitment message comprises determining whether the square of the master control number (a) equals the product of each of the control numbers ($a_i$) of said range, modulo n.

8. Method as claimed in any one of the preceding claims, wherein the sender determines a range of oblivious transfer control strings ($u_i$) for each of said values of said range, each oblivious transfer control strings ($u_i$) comprising the square root of the respective control number ($a_i$) modulo said predetermined

number (n).

9. Method as claimed in claim 8, wherein the oblivious transfer control string ($u_x$) for the at least one committed value comprises the square root of each control number ($a_i$) modulo said predetermined number (n).

10. Method as claimed in claim 9, wherein said question includes the transfer of at least one of said oblivious transfer control strings.

11. Method as claimed in any of the preceding claims, wherein the commitment message includes at least two committed values.

12. Method as claimed in any of the preceding claims, wherein at least two questions are posed.

13. Computer program product, directly loadable into the internal memory of a computer, comprising software portions for performing the steps of any one of the claims 1-12, when said product is run on a computer.

```
A                                          B
┌──────────────────┐      ┌──────────────────┐
│ select range     │◄────►│ select range     │
└──────────────────┘      └──────────────────┘
        │                          │
        ▼                          ▼
┌──────────────────┐      ┌──────────────────┐
│ commit to value x│      │ commit to value y│
└──────────────────┘      └──────────────────┘
        │                          │
        ▼                          ▼
┌──────────────────┐      ┌──────────────────┐
│ compose commitment│     │ compose commitment│
│ message          │      │ message          │
└──────────────────┘      └──────────────────┘
        │                          │
        ▼                          ▼
┌──────────────────┐      ┌──────────────────┐
│ exchange         │◄────►│ exchange         │
│ message          │      │ message          │
└──────────────────┘      └──────────────────┘
        │                          │
        ▼                          ▼
┌──────────────────┐      ┌──────────────────┐
│ verification     │      │ verification     │
│ received message │      │ received message │
└──────────────────┘      └──────────────────┘
        │                          │
        ▼                          ▼
┌──────────────────┐      ┌──────────────────┐
│ oblivious transfer│◄───►│ oblivious transfer│
│ question & answer│      │ question & answer│
└──────────────────┘      └──────────────────┘
        │                          │
        ▼                          ▼
┌──────────────────┐      ┌──────────────────┐
│ verification     │      │ verification     │
│ reply            │      │ reply            │
└──────────────────┘      └──────────────────┘
        │                          │
        ▼                          ▼
┌──────────────────┐      ┌──────────────────┐
│ result           │      │ result           │
└──────────────────┘      └──────────────────┘
```

Fig. 1

**European Patent Office**

## EUROPEAN SEARCH REPORT

Application Number

EP 00 20 2091

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 615 269 A (MICALI SILVIO) 25 March 1997 (1997-03-25) * abstract * * column 1, line 20 - line 35 * * column 2, line 10 - column 3, line 49 * * column 17, line 5 - column 19, line 3 * * column 19, line 51 - line 57 * * column 20, line 36 - line 56 * --- | 1,2 | H04L9/32 |
| A | BRASSARD G ET AL: "MINIMUM DISCLOSURE PROOFS OF KNOWLEDGE" JOURNAL OF COMPUTER AND SYSTEM SCIENCES,GB,ACADEMIC PRESS, INC., LONDON, vol. 37, 1988, pages 156-189, XP000575720 ISSN: 0022-0000 * page 157 - page 158 * * page 179 * --- | 3 | |
| A | BELLARE M; MICALI S: "Non-Interactive Oblivious Transfer and Applications" ADVANCES IN CRYPTOLOGY - CRYPTO'89, 1990, pages 547-557, XP000929209 Berlin, West Germany, Springer Verlag ISBN: 3-540-97317-6 * the whole document * --- | 2 | |
| A | BOYAR J ET AL: "SHORT DISCREET PROOFS" ADVANCES IN CRYPTOLOGY - EUROCRYPT. INTERNATIONAL CONFERENCE ON THE THEORY AND APPLICATION OF CRYPTOGRAPHIC TECHNIQUES,DE,BERLIN, SPRINGER, 12 May 1996 (1996-05-12), pages 131-142, XP000725439 ISBN: 3-540-61186-X * page 131 - page 134 * --- -/-- | 1-13 | TECHNICAL FIELDS SEARCHED (Int.Cl.7) H04L G06F |

The present search report has been drawn up for all claims

| Place of search | Date of completion of the search | Examiner |
|---|---|---|
| BERLIN | 23 August 2000 | Carnerero Álvaro, F |

EPO FORM 1503 03.82 (P04C01)

## EUROPEAN SEARCH REPORT

**European Patent Office**

**Application Number**

EP 00 20 2091

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CREPEAU C ET AL: "COMMITTED OBLIVIOUS TRANSFER AND PRIVATE MULTI-PARTY COMPUTATION" PROCEEDINGS OF THE ANNUAL INTERNATIONAL CRYPTOLOGY CONFERENCE (CRYPTO),DE,BERLIN, SPRINGER, vol. CONF. 15, 27 August 1995 (1995-08-27), pages 110-123, XP000533636 ISBN: 3-540-60221-6 * page 110 * * page 112 * ----- | 1-13 | |
| | | | **TECHNICAL FIELDS SEARCHED** (Int.Cl.7) |

The present search report has been drawn up for all claims

| Place of search | Date of completion of the search | Examiner |
|---|---|---|
| BERLIN | 23 August 2000 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 20 2091

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2000

| Patent document cited in search report | Publication date | Patent family member(s) | Publication date |
|---|---|---|---|
| US 5615269 A | 25-03-1997 | AU 1951497 A<br>WO 9724833 A | 28-07-1997<br>10-07-1997 |

EPO FORM P0459

For more details about this annex : see Official Journal of the European Patent Office, No. 12/82